# DEMANDE DE BREVET EUROPEEN

(11) **EP 2 466 471 A1**
(43) Date de publication de la demande: **20.06.2012**
(21) Numéro de dépôt: 11193556.5
(22) Date de dépôt: 14.12.2011
(51) Int. Cl.: G06F 11/36

(54) **Module matériel de sécurité et procédé de débogage d'un tel module**

(30) Priorité: 17.12.2010 FR 1060722
(71) Demandeur: Oberthur Technologies, 92300 Levallois Perret (FR)
(72) Inventeur: Boisde, Matthieu, 33850 Leognan (FR); Bousquet, Nicolas, 33600 Pessac (FR)
(74) Mandataire: Le Tourneau, Augustin

(57) **Abrégé**

La présente invention concerne le domaine du débogage de programmes ou applications informatiques, notamment dans le cas d'environnements fermés tels que des modules matériels de sécurité (HSM ou "hardware security module"). Le procédé de débogage et le module materiel de sécurité proposés un moyen d'inhibition ou d'activation, à la demande, des instructions de débogage. Ainsi, sous certaines conditions d'opération, les instructions de débogage pourront étre désactivées de sorte a ne pas étre exécutées lors de l'exécution du programme compilé les contenant. Cela permet de réduire le temps d'exécution du programme compilé lors de son utilisation en production.

## Description

La présente invention concerne le domaine du débogage (ou *"debugging"* selon la terminologie anglo-saxonne) de programmes ou applications informatiques, notamment dans le cas d'environnements fermés tels que des modules matériels de sécurité (HSM ou "*hardware security module*")*.*

L'invention concerne plus particulièrement un procédé de débogage et un module matériel de sécurité prévu pour un tel débogage. Un tel module matériel de sécurité peut revêtir la forme d'une carte à microprocesseur ou "carte à puce" (également connues sous la terminologie "*smart card*'*,* par exemple une carte dotée d'un module sécurisé telle une carte SIM), d'une clé USB sécurisée à microprocesseur, d'un module sécurisé de passeport biométrique, etc.

Un programme informatique regroupe un ensemble d'instructions dont l'enchaînement par leur exécution permet de réaliser une opération ou un ensemble d'opérations souhaitées par le programmeur.

De façon connue en soi, le débogage d'un programme informatique vise l'activité et les démarches qui consistent à détecter, diagnostiquer et corriger des bogues ou *bugs,* c'est-à-dire les causes de dysfonctionnements du programme.

Les causes de dysfonctionnements peuvent résulter d'erreurs de programmation, mais également d'incompatibilités ou d'une mauvaise gestion entre le code du programme et les ressources matérielles disponibles lors de l'exécution du programme.

Classiquement, les programmes informatiques ou *software* sont écrits dans un langage de programmation (code source), débogués depuis le code source puis compilés, le tout au sein d'un environnement de développement intégré *(EDI* ou *IDE* en anglais pour "*Integrated Development Environment*") regroupant l'ensemble des outils pour le développement de logiciels. Les environnements de développement sont, pour des raisons de coûts, exécutés la plupart du temps sur des ordinateurs personnels (PC pour "*personnal computer*")*.*

Ainsi, un programmeur peut tester un programme développé en l'exécutant pas à pas depuis son code source (on parle de "débogage en ligne"), c'est-à-dire instruction après instruction, ou en y insérant des instructions supplémentaires, appelées instructions de débogage, dont l'exécution ne vient pas modifier la réalisation de l'opération ou des opérations du programme.

Les instructions de débogage peuvent par exemple imprimer, enregistrer ou simplement afficher des valeurs courantes de variables internes au programme, telles que les valeurs mémorisées dans la pile d'exécution (ou *"runtime stack*")*.*

Lorsque le processus de débogage est terminé, les instructions de débogage sont supprimées du code source et ce dernier est compilé pour obtenir un programme compilé exécutable, c'est-à-dire une version de production du programme. Il est alors chargé en mémoire de la plateforme matérielle dans laquelle il est destiné à être exécuté, cette plateforme lui offrant un environnement d'exécution, illustré par exemple par le système d'exploitation qu'elle comprend.

Le programme compilé peut par exemple être chargé en mémoire ROM ou EEPROM (pour "*Electrically-Erasable Programmable Read-Only Memory*") d'un module matériel de sécurité.

Les modules matériels de sécurité présentent toutefois des particularités matérielles et/ou logicielles (par exemple relatives au système d'exploitation) par rapport aux ordinateurs personnels dans lesquels sont mis en oeuvre les environnements de développement, notamment en ce qu'ils embarquent de faibles ressources et sont conçues pour révéler le minimum d'information sur leur fonctionnement interne.

Il est ainsi classique d'avoir recours, au sein d'un environnement de développement sur PC, à des émulateurs de module matériel de sécurité., et d'exécuter ces émulateurs pour reproduire, de la façon la plus fidèle possible, un environnement d'exécution du module matériel de sécurité.

Il arrive cependant qu'un programme compilé ne soit pas satisfaisant et requière un nouveau débogage, par exemple parce que toutes les situations n'auraient pas été testées lors de précédents débogages. Dans ce cas, il est courant de reprendre le code source correspondant et de le tester à nouveau dans l'environnement de développement.

Cette approche s'avère satisfaisante lorsque l'environnement de développement est sensiblement similaire à celui d'exécution du programme, une fois ce dernier compilé. En effet, dans ce cas, les dysfonctionnements observés à l'aide du programme compilé sont susceptibles d'être reproduits dans l'environnement de développement et peuvent alors être corrigés.

Toutefois, ce n'est pas toujours le cas pour les modules matériels de sécurité en raison des divergences mentionnées précédemment mais également parce que ces modules peuvent subir des personnalisations faites par un client (par exemple une banque) ou avoir des composants matériels réalisant des fautes imprévues liées à leurs caractéristiques individuelles. Il est dans ce cas difficilement envisageable d'ajuster les émulateurs, voire impossible lorsque des caractéristiques individuelles propres à chaque module HSM rentrent en ligne de compte.

Ces divergences sont en outre difficilement déterminables et observables en raison du caractère fermé des modules matériels de sécurité, résultant par exemple de protections sécuritaires qu'ils mettent en oeuvre pour révéler le minimum de leur fonctionnement interne.

Ainsi, les émulateurs de module matériel de sécurité utilisés pour le développement de programmes reposent généralement sur une modélisation imparfaite de l'environnement d'exécution du module HSM.

Il en résulte que certains dysfonctionnements observés lors de l'exécution du programme compilé dans un module matériel de sécurité ne peuvent être reproduits par le code source correspondant lorsque ce dernier est exécuté dans l'environnement de développement, et ce malgré l'utilisation d'émulateurs.

Cette difficulté, présente dans le cas des modules matériels de sécurité, engendre par conséquent des coûts supplémentaires, parfois incontrôlés, pour déboguer un programme informatique et fournir une version compilée "propre".

C'est dans ce contexte que la présente invention entend fournir une amélioration des systèmes et procédés de l'état de la technique aux fins de débogage.

Dans ce dessein, l'invention concerne notamment un module matériel de sécurité comprenant un microprocesseur et un programme compilé exécutable par ledit microprocesseur pour réaliser une opération, **caractérisé en ce que :**
- le programme compilé comprend au moins une instruction de débogage dont l'exécution ou non ne modifie pas celle de ladite opération, et
- le module matériel de sécurité comprend un moyen d'inhibition ou d'activation de l'instruction de débogage lors de l'exécution du programme compilé.

L'invention permet d'améliorer le débogage des programmes sans préjudice de leurs performances lors de leur exploitation.

En effet, la présence des instructions de débogage au sein même du programme compilé permet de procéder au débogage de ce programme dans ses conditions exactes de production, et non dans des conditions approximatives créées par un émulateur.

En outre, la mise en place d'un moyen d'inhibition ou d'activation des instructions de débogage permet de conserver le même programme compilé comprenant les instructions de débogage lors du passage en phase de production. En effet, il est alors possible d'inhiber ces instructions de débogage, signifiant qu'elles ne sont pas exécutées lors de l'exécution du programme compilé, de sorte que l'exécution du programme compilé en phase de production n'est pas substantiellement rallongée.

En revanche, dès lors que des tests sont nécessaires, les instructions de débogage sont activées.

Comme il sera vu par la suite, l'exécution des instructions de débogage permet de générer des informations de débogage (par exemple à des valeurs de variables internes) qui pourront être utilisées et exploitées par une application de débogage, par exemple au travers d'un simple affichage à un utilisateur.

Dans un mode de réalisation, le module matériel de sécurité est configuré pour modifier l'état d'inhibition ou d'activation dudit moyen d'inhibition ou d'activation en réponse à une commande reçue d'une entité externe.

Ici et pour la suite, la notion d'"*externe*" est relative à l'appartenance d'un élément ou non au module matériel de sécurité HSM considéré.

Cette disposition permet de commander depuis l'extérieur du module sécurisé (par exemple une carte à puce) le mode "test/débogage" ou "exploitation" dans lequel on souhaite utiliser le programme compilé. Ainsi, lors de personnalisations du module sécurisé (par exemple par un fournisseur, puis par une banquer, etc.), il est facile de revenir dans une configuration de débogage pour identifier des causes de dysfonctionnements résultant d'éventuelles personnalisations.

Selon une caractéristique particulière, ledit moyen d'inhibition ou d'activation comprend un bit d'état mémorisé en mémoire du module matériel de sécurité. Cette disposition s'avère particulièrement simple à mettre en oeuvre, d'une part car elle ne requiert que peu de ressources dans le module sécurisé (qui a généralement des ressources limitées), et d'autre part car une simple commande d'écriture depuis l'entité externe peut suffire pour modifier l'état du moyen d'inhibition ou d'activation.

En particulier, l'instruction de débogage comprend une instruction conditionnelle fonction dudit bit d'état. Encore une fois, cette disposition présente une complexité faible pour l'obtention de l'inhibition ou de l'activation selon l'invention.

En particulier, ladite mémoire est une mémoire programmable une seule fois de sorte qu'une inhibition de l'instruction de débogage soit définitive.

Ainsi, généralement l'information ou bit d'état mémorisé prend initialement une valeur correspondant à un état d'activation (permettant donc initialement d'effectuer un débogage), puis prend, de façon définitive en raison de la nature de la mémoire, une valeur d'inhibition dès lors que les tests de débogage sont finis.

Cette disposition offre un niveau supérieur de sécurité dans la mesure où, dès l'inhibition, le module matériel de sécurité retrouve de façon définitive sa configuration première, à savoir révéler a *minima* son fonctionnement interne.

On notera d'ailleurs que cette information peut être utilisée dans les instructions conditionnelles évoquées précédemment pour autoriser ou non l'exécution d'une instruction de débogage.

Selon une caractéristique particulière, le moyen d'inhibition ou d'activation est protégé en modification par un mécanisme cryptographique de sécurité. Dans le contexte où d'un côté le module matériel de sécurité est conçu pour révéler a *minima* son fonctionnement interne et d'un autre côté les instructions de débogage vise à révéler une partie de celui-ci, cette disposition permet de garantir un niveau raisonnable de sécurité pour éviter de dévoiler, sans droit, des informations de ce fonctionnement interne.

Dans un mode de réalisation, l'au moins une instruction de débogage est configurée pour copier des informations de débogage dans un fichier stocké localement dans le module matériel de sécurité, et ce dernier est configuré pour transmettre, sur requête d'une entité externe, ledit fichier.

Cette configuration correspond à un mode de fonctionnement, nommé "différé" par la suite, particulièrement adapté pour des modules disposant d'une unique connexion type ISO 7816 ou ISO 14443 avec un lecteur.

En effet, dans le cas par exemple de messages APDU échangés (ISO 7816), les informations de débogage ne peuvent être transmises au fur et à mesure de leur création car seule une réponse à une commande APDU peut être fournie et il serait complexe de prévoir, dans les scripts de test, des commandes synchronisées avec les instructions de débogage pour recevoir leurs résultats. En outre, il est préférable d'éviter d'intervenir dans les échanges APDU classiques pour faire exécuter le programme compilé, afin de conserver une configuration d'exécution aussi proche que possible d'une configuration de production.

Le fichier local sert ainsi de mémoire temporaire des informations de configuration en attendant la "libération" de la liaison ISO 7816, moment à partir duquel le fichier peut être communiqué.

En particulier, ledit fichier stocké localement est de type liste circulaire de longueur fixe. Cette configuration permet de mieux contrôler l'utilisation des ressources mémoire limitées du module HSM.

Selon une variante, le module matériel de sécurité est configuré pour transmettre, lors de l'exécution du programme compilé, des données, dites de débogage, résultant de l'exécution de l'instruction de débogage sur un canal de communication initié par le module matériel de sécurité vers une entité externe.

Dans ce cas en effet, le canal initié par le module peut être en parallèle des échanges APDU ou équivalents permettant l'exécution "classique" du programme compilé. Il s'agit alors d'un mode de fonctionnement dit "temps réel", puisqu'une application de débogage (sur l'entité externe) peut récupérer les informations de débogage au fur et à mesure de leur création.

A titre d'exemple, l'instruction de débogage peut alors être configurée pour écrire les données de débogage sur une socket UDP créée par le module matériel de sécurité.

Dans cette configuration particulière, l'invention a également pour objet un téléphone mobile comprenant une interface de communication sans contact et un tel module matériel de sécurité, le module matériel de sécurité comprenant un premier contact électrique relié à ladite interface de communication sans contact, et dans lequel un canal de communication dédié au pilotage de l'exécution du programme compilé par une entité maître externe et le canal de communication initié par le module matériel de sécurité avec ladite entité externe sont, l'un, conforme à une norme de communication sans contact via le premier contact électrique et, l'autre, conforme à une norme de communication avec contact via un deuxième contact électrique du module matériel de sécurité.

Selon un mode de réalisation particulier de l'invention, le moyen d'inhibition ou d'activation peut comprendre, outre un état d'inhibition, deux états d'activation correspondant respectivement, à une configuration de l'instruction de débogage pour stocker localement des informations de débogage résultant de l'exécution de cette instruction de débogage et à une configuration de l'instruction de débogage pour transmettre directement ces informations de débogage sur un canal de communication initié par le module matériel de sécurité.

Il est ainsi possible de basculer entre un débogage "temps réel" lorsque les connexions entre le module HSM et l'entité externe le permettent et un débogage "en deux temps", par exemple par défaut. Cette décision peut relever indifféremment de l'entité externe (disposant d'un script test) par l'envoi d'une commande de modification de l'état d'inhibition/activation vers l'état souhaité, ou du module HSM lui-même, selon que l'une ou l'autre ait détecté par exemple la suffisance ou l'insuffisance des connexions entre elles.

Selon une caractéristique de l'invention, le module matériel de sécurité peut être configuré pour crypter les données de débogage transmises sur le canal de communication qu'il initie, permettant de sécuriser les opérations de débogage vis-à-vis du fonctionnement interne du module sécurisé qui doit rester autant que possible non révélé.

Corrélativement, l'invention concerne également un procédé de débogage dans un module matériel de sécurité comprenant un microprocesseur et un programme compilé exécutable par ledit microprocesseur pour réaliser une opération, c**aractérisé en ce que**, le programme compilé comprenant au moins une instruction de débogage dont l'exécution ou non ne modifie pas celle de ladite opération, le procédé comprend au moins une étape de bascule entre un état d'activation dans lequel l'instruction de débogage est exécutée lorsque le programme compilé l'est, et un état d'inhibition dans lequel l'instruction de débogage n'est pas exécutée lorsque le programme compilé l'est.

Le procédé de débogage présente des avantages similaires à ceux du module HSM exposé ci-dessus. En particulier, il permet d'améliorer le débogage des programmes sans préjudice de leurs performances lors de leur exploitation.

De façon optionnelle, le procédé peut comprendre des étapes et caractéristiques se rapportant aux moyens et caractéristiques du module HSM.

Et notamment, il peut être prévu, une étape de réception, par le module matériel de sécurité, d'une commande de modification de l'état d'inhibition ou d'activation émise par une entité externe.

Selon une autre caractéristique, le procédé peut comprendre une étape de bascule définitive dans l'état d'inhibition, par exemple par écriture d'une information d'inhibition dans une mémoire programmable une seule fois.

Selon encore une autre caractéristique, le procédé peut comprendre une étape préalable d'authentification pour autoriser la bascule d'un état vers l'autre.

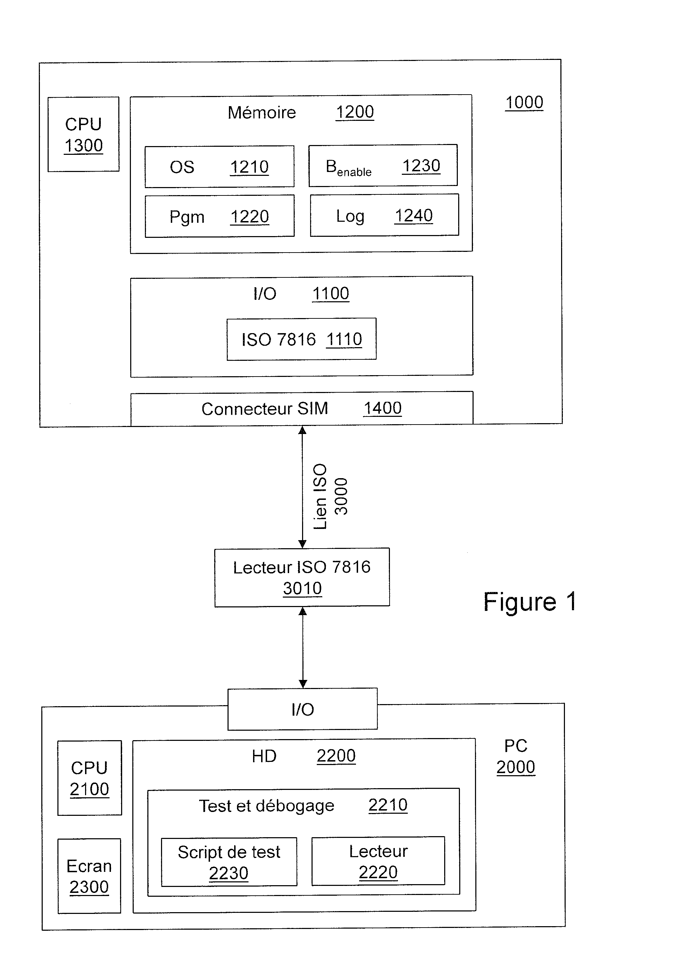

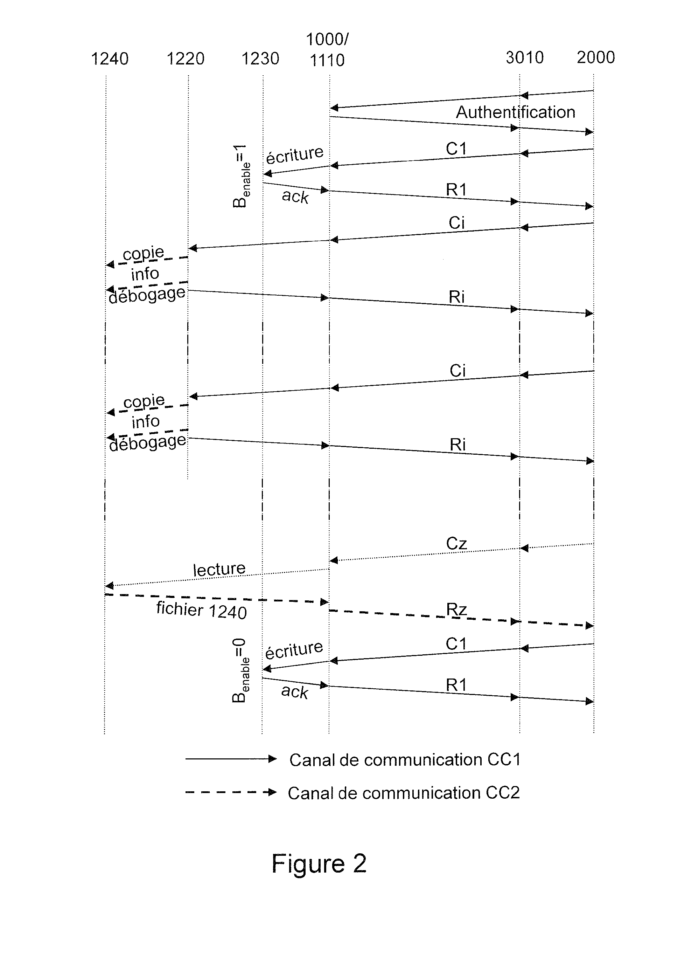

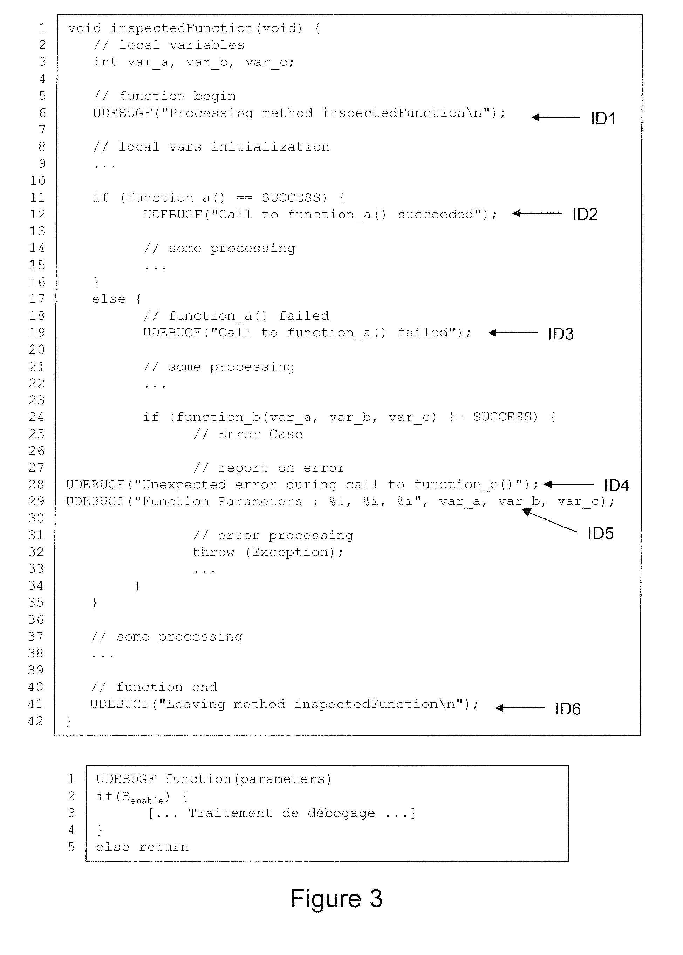

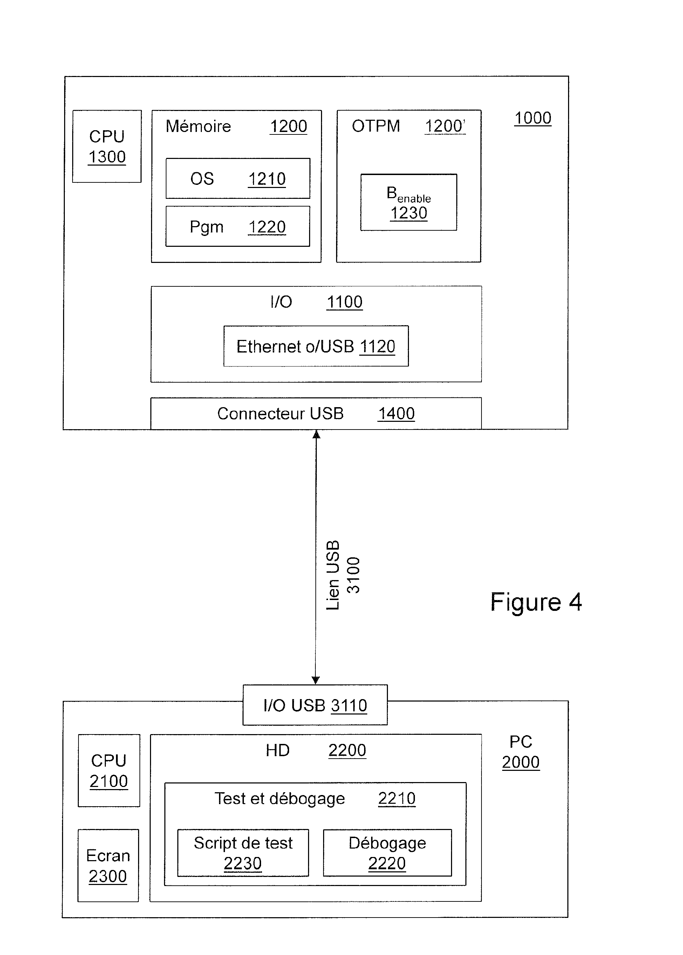

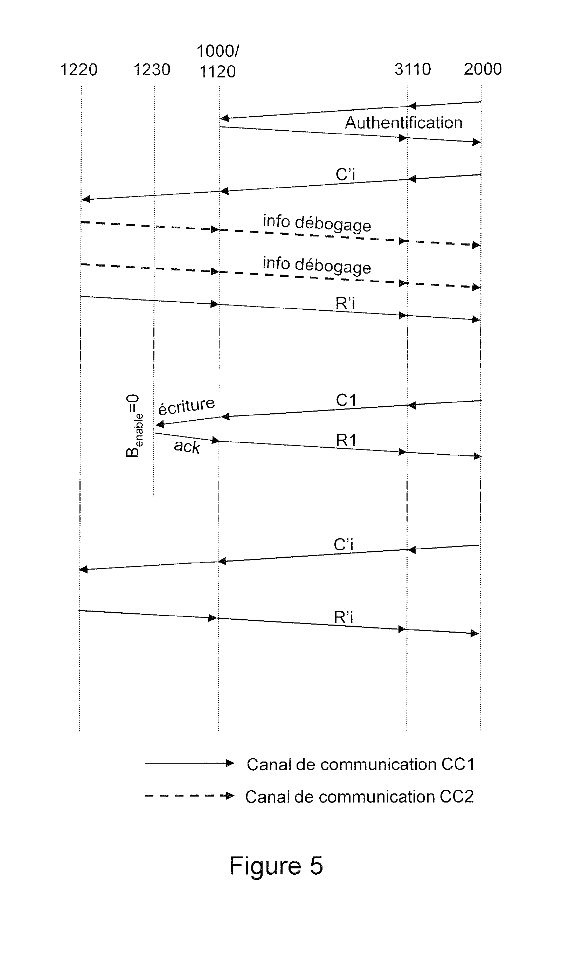

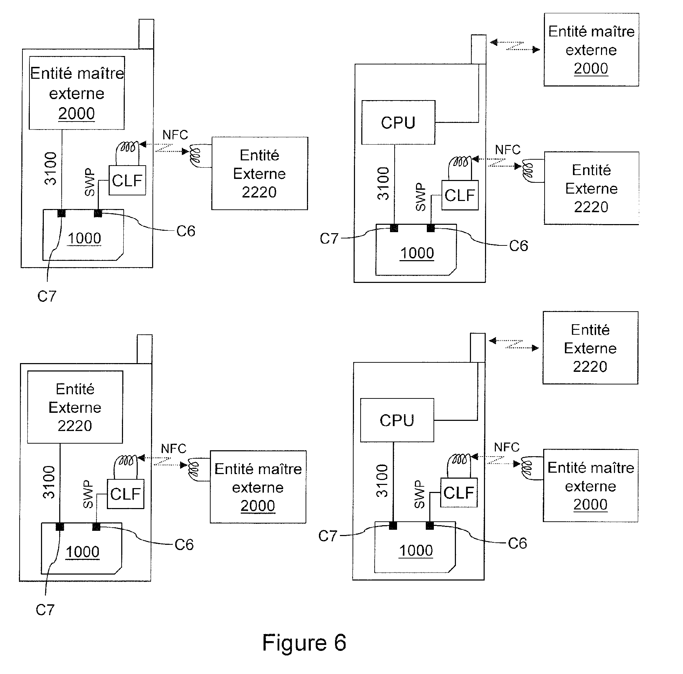

D'autres particularités et avantages de l'invention apparaîtront dans la description ci-après, illustrée par les dessins ci-joints, dans lesquels :
- **la** **figure 1** illustre un système de débogage en mode "différé" selon l'invention, utilisant une connexion classique ISO 7816;
- **la** **figure 2** illustre des échanges de données entre la carte à microprocesseur et un équipement de test, dans le mode différé de la **figure 1**;
- **la** **figure 3** illustre un exemple simplifié de programme compilé (dans sa version source) incluant des instructions de débogage selon un mode de réalisation de l'invention;
- **la** **figure 4** illustre un système de débogage en mode "temps réel" selon l'invention, utilisant une connexion USB;
- **la** **figure 5** illustre des échanges de données entre la carte à microprocesseur et un équipement de test, dans le mode temps réel de la **figure 4**; et
- **la** **figure 6** illustre une configuration de mise en oeuvre de l'invention pour un module matériel de sécurité intégré à un téléphone mobile doté d'une interface de communication sans contact de type NFC.

La présente invention s'applique à tout type de module matériel de sécurité. Pour les besoins d'illustration uniquement, il est fait référence pour la suite à une carte à microprocesseur (ou "carte à puce"). Un module matériel est dit de sécurité par exemple s'il est conforme à une norme relative à la sécurité, par exemple s'il est conforme aux critères communs et/ou à la norme "FIPS 140" (pour "*Federal Information Processing Standard*")*.*

Les cartes à microprocesseur comprennent des programmes compilés qu'elles peuvent exécuter sur commande d'une entité externe. En effet, les cartes à microprocesseur s'inscrivent dans une relation maître/esclave (similaire à un mode client/serveur), dans laquelle un lecteur externe envoie des commandes que la carte exécute. Cette exécution entraîne celle des programmes compilés qu'elle contient, et fournit des réponses au lecteur une fois l'exécution terminée.

Comme décrit ci-après, des exemples de réalisation de l'invention mettent en oeuvre au niveau d'une carte à microprocesseur un tel programme compilé dans lequel des instructions de débogage ont été conservées, en plus des instructions destinées à réaliser l'opération ou fonction première dudit programme.

Les instructions de débogage sont exécutées lors de phase de tests. C'est ainsi qu'un programme ou script de test maître est généralement conçu pour venir piloter l'exécution du programme compilé, par l'envoi de commandes vers la carte à microprocesseur. Le script de test n'est rien d'autre qu'un programme potentiellement de production dont certains paramètres sont fixés et connus de sorte à définir des tests.

Les instructions de débogage sont alors exécutées lors de l'exécution du programme compilé, et fournissent, à un logiciel de débogage (lequel peut être distinct d'un logiciel contenant le script de test), des informations de débogage pertinentes relatives à cette exécution du programme compilé dans un environnement d'exécution de production, ici dans le système d'exploitation de la carte à microprocesseur.

Il est ainsi possible de comparer les résultats obtenus des instructions de débogage avec des résultats attendus.

Le script de test est par exemple dans un équipement externe muni d'un lecteur de carte à microprocesseur et peut dialoguer, selon un mode maître/esclave, avec la carte à microprocesseur à l'aide de protocoles classiques, par exemple selon la norme ISO 7816 mettant en oeuvre des commandes et réponses APDU.

Dans une configuration d'utilisation normale du programme compilé ("conditions de production"), ces échanges entre le script de test et la carte ne concernent pas les instructions de débogage car les scripts de test représentent les conditions normales d'exécution du programme compilé et accèdent donc au programme compilé dans la carte à microprocesseur uniquement pour y réaliser l'opération première du programme compilé, certes avec éventuellement certains paramètres de test prédéfinis.

Comme les instructions de débogage viennent accroître la taille du programme compilé, on veillera à en limiter le nombre et à les placer de façon judicieuse en fonction des enchaînements algorithmiques du programme, de sorte à satisfaire les ressources limitées des cartes à microprocesseur (par exemple la capacité de la mémoire morte).

Outre l'augmentation de la taille du code compilé, ces instructions de débogage introduisent une augmentation du temps d'exécution du programme compilé.

Selon l'invention, il est alors prévu d'avoir recours à un moyen d'inhibition ou d'activation, à la demande, de ces instructions de débogage. Ainsi, sous certaines conditions d'opération, les instructions de débogage pourront être désactivées de sorte à ne pas être exécutées lors de l'exécution du programme compilé les contenant. Cela permet de réduire le temps d'exécution du programme compilé lors de son utilisation en production.

Par ailleurs, compte tenu du fait que les scripts de test représentent des conditions normales d'exécution du programme, les échanges (type ADPU) avec la carte à microprocesseur ne sont pas conçus pour fournir, au lecteur de carte (là où l'utilisateur testeur a accès), les résultats de l'exécution des instructions de débogage.

En outre, s'il avait fallu les récupérer à l'aide de commandes APDU, de nombreuses et complexes adaptations seraient nécessaires pour s'assurer qu'une commande APDU soit générée à chaque instruction de débogage afin d'en récupérer le résultat. Or ces adaptations ne sont pas envisageables.

Un autre canal de communication (différent de la relation maître/esclave des commandes APDU) créé et utilisé à l'initiative de la carte à microprocesseur (et non plus d'un lecteur de carte) pourra alors être envisagé, afin de communiquer les résultats de l'exécution des instructions de débogage.

Ces deux canaux de communication sont de nature différente (donc logiquement différents), mais peuvent également être, de surcroît, distincts physiquement, par exemple via deux connexions physiques distinctes entre la carte et le lecteur de carte. On garantit ainsi que la configuration dans laquelle le programme compilé est exécuté est la plus conforme possible de la configuration de production.

On illustre maintenant l'invention en référence à diverses réalisations de systèmes de débogage.

La **figure 1** illustre un système de débogage utilisant une connexion classique ISO 7816, sur laquelle sont mis en oeuvre des échanges de messages APDU.

Cette connexion présente l'inconvénient de ne permettre qu'une communication à la fois, c'est-à-dire un seul canal de communication à un instant donné. Pour cette raison, le mode de réalisation correspondant à cette figure est appelé par la suite "mode différé", en ce que les résultats des instructions de débogage (le canal initié par la carte) ne peuvent être transmis en même temps que le script de test échange (le canal maître/esclave) avec la carte pour l'exécution du programme compilé. Ces résultats seront donc transmis sur la liaison ISO 7816, successivement à la fin de l'utilisation du premier canal de communication (c'est-à-dire généralement à la fin de l'exécution du script de test).

Pour cette raison, ce mode de réalisation ne fournit pas, à proprement parler, les informations de débogage en temps réel.

La **figure 4** illustre un système de débogage équivalent utilisant, en revanche, une connexion autorisant plusieurs communications simultanées, par exemple une connexion USB.

Il est en effet maintenant établi que certaines cartes à microcontrôleur présentent une interface USB permettant plusieurs communications parallèles entre le lecteur de carte et cette carte.

Le mode de réalisation de l'invention correspondant à cette figure est appelé par la suite "mode temps réel" en ce que les résultats des instructions de débogage peut être directement transmis à l'entité externe dès l'exécution de ces instructions. Les échanges avec le script de test (le canal maître/esclave) et la transmission des résultats des instructions de débogage (le canal initié par la carte) peuvent alors être simultanés sur la même liaison physique USB entre la carte à microprocesseur et le lecteur de carte.

Bien entendu, d'autres configurations sont envisageables. Par exemple, si la carte à microprocesseur dispose de deux interfaces de communication (donc deux liaisons physiques, par exemple l'une par contact ISO 7816 ou USB avec l'entité externe détenant le script test, et l'autre sans contact, par exemple ISO 14443 avec l'entité externe, identique ou différente, détenant un logiciel de débogage; également par exemple l'une par certains contacts électriques d'une interface physique ISO 7816 et l'autre par d'autres contacts de cette même interface physique), les deux canaux de communication peuvent être simultanés sur les deux liaisons physiques distinctes correspondantes.

Egalement, comme illustré sur la **figure 6**, la carte à microprocesseur, par exemple une carte SIM à contact ou tout circuit intégré, peut faire partie d'un équipement hôte, tel un téléphone mobile ou *smart phone.* Cet équipement hôte est doté d'un circuit CLF *("ContactLess Frontend*") sans contact de type NFC, connecté au contact électrique C6 de la carte SIM. Cette dernière communique avec le circuit CLF à l'aide du protocole SWP (protocole à simple fil ― *"Simple Wire Protocole"),* permettant de communiquer sans contact avec une entité externe via le circuit CLF (ou en variante avec l'ordinateur 2000 décrit par la suite).

Dans cette configuration, l'un des canaux de communication (canal maître/esclave ou canal initié par la carte) est mis en oeuvre sur cette interface de communication sans contact (contact C6-SWP-CLF-NFC) et l'autre canal de communication peut être mis en oeuvre à l'aide du protocole classique ISO 7816 au niveau du contact C7 (I/O). De préférence, la communication sans contact NFC est initiée par la carte SIM.

Les différentes configurations représentées sur cette figure diffèrent en fonction de l'utilisation de l'un ou l'autre de ces canaux pour communiquer soit avec l'entité externe soit avec l'ordinateur maître 2000, et également en fonction de la mise en oeuvre de l'entité externe ou de l'ordinateur maître 2000 (selon le cas) à l'intérieur même du téléphone mobile ou par un équipement externe avec lequel le téléphone mobile communique via des moyens de communication mobile classiques.

En référence à la **figure 1** décrivant le "mode différé" une carte 1000 à microprocesseur 1300 comprend également une mémoire 1200, par exemple EEPROM, un module I/O de communication 1100 et une interface physique de connexion 1400 permettant au module 1100 de communiquer avec l'extérieur. La carte 1000 peut être un module matériel de sécurité permettant de protéger des données confidentielles, par exemple au travers de procédures d'authentification et/ou de cryptage.

Le module de communication 1100 est ici représenté par un module de communication ISO 7816 (référence 1110) permettant de communiquer avec un lecteur externe par messages APDU. Bien entendu, d'autres protocoles de communication (avec ou sans contact, USB, etc.) peuvent être envisagés dans le "mode différé" décrit ici. L'interface de connexion 1400 peut être à contact ou sans contact selon le cas de figure envisagé.

La mémoire 1200 comprend ici un système d'exploitation OS 1210 dont l'exécution par le microprocesseur 1300 définit un contexte d'exécution pour d'autres applications ou programmes. Elle comprend également le programme compilé 1220 incluant des instructions de débogage ID, objet du débogage selon l'invention, ainsi qu'un moyen 1230 d'activation ou d'inhibition des instructions de débogage et un fichier de débogage 1240.

A noter que le programme compilé 1220 à tester et à déboguer comprend un ensemble d'instructions I qui réalisent une ou plusieurs opérations OP et définissent la fonction première du programme en production, et comprend une ou plusieurs instructions de débogage ID introduites au milieu des instructions I. Les instructions de débogage ID n'ont aucun impact sur la réalisation de la fonction du programme, c'est-à-dire que leur exécution ou non pendant l'exécution du programme compilé n'a aucun effet sur l'exécution des instructions I et donc sur le résultat attendu du programme par l'application le sollicitant.

Dans un exemple particulier, le programme compilé peut être directement le système d'exploitation OS 1210, auquel cas les explications suivants seront adaptées au programme compilé OS 1210. L'environnement d'exécution est alors constitué des composants matériels de la carte et de leurs pilotes (ou *drivers*)*.*

Le moyen 1230 peut simplement prendre la forme d'un dispositif à deux états '0' ou '1', par exemple au travers d'un bit B_{enable} (ou drapeau) en mémoire: B_{enable}=1 correspond à des instructions de débogage activées comme décrit par la suite (état dit "actif"), et B_{enable}=0 à des instructions désactivées (état dit "d'inhibition"). Le moyen 1230 peut toutefois prendre des formes plus complexes, comme par exemple une machine à états.

Un bus central (non représenté) relie les différents composants électroniques de la carte 1000 décrits précédemment, ainsi qu'une mémoire vive RAM (non représentée) dans laquelle sont chargées les instructions du programme compilé 1220 et celles de l'OS 1210 pour leurs exécutions par le microprocesseur 1300 lors de l'alimentation électrique de la carte 1000.

Un lecteur de carte 3010, ici de type ISO pour permettre un dialogue avec le module de communication 1110 selon la norme ISO 7816, est prévu pour recevoir la carte 1000. Sur la figure, on a illustré par la référence 3000 le lien physique de connexion entre la carte 1000 et le lecteur de carte 3010. A noter que dans certains modes de réalisation, ce lien physique peut correspondre à une communication sans contact ISO 14443.

Ce lecteur de carte 3010 équipe ou est relié à un équipement de test et de débogage, ici un simple ordinateur personnel PC 2000.

Cet ordinateur 2000 est de type classique et comprend, pour les besoins d'illustration de l'invention, un processeur CPU 2100, un écran d'affichage 2300 et une mémoire 2200, type disque dur (HD), contenant une application de test et de débogage 2210, laquelle contient notamment un script de test 2230 et un programme lecteur 2220 de fichier de débogage dit également "logiciel de débogage".

Le script de test 2230 peut consister en une séquence de commande ISO 7816 (commandes APDU) destinées à exécuter et piloter automatiquement le programme compilé 1220, et également d'autres fonctions de la carte 1000 (par exemple des commandes du système d'exploitation OS).

Le programme lecteur 2220 est configuré, quant à lui, pour lire un fichier de débogage tel que le fichier 1240 et pour afficher les informations de débogage à un utilisateur testeur, via l'écran 2300. Le programme lecteur 2220 peut être lancé automatiquement à la fin de l'exécution du script de test 2230, afin de rapatrier le fichier de débogage 1240 pour procéder à sa lecture et à son affichage.

En variante, une action de l'utilisateur testeur peut être requise.

Par ailleurs, le script de test 2230 et le programme lecteur 2220 peuvent être deux applications indépendantes, c'est-à-dire n'appartenant pas à une même application de test et de débogage 2210.

On décrit maintenant le processus de débogage à la demande de l'utilisateur testeur, en référence à la **figure 2**. Sur cette figure, les pointes des flèches désignent les éléments intervenant soit dans le relais soit dans le traitement d'un message transmis.

L'utilisateur lance l'application 2210. Comme il s'agit d'une application de test et de débogage, les programmes à tester dans la carte 1000 doivent exécuter les instructions de débogage ID qu'ils contiennent.

A cet effet, l'application 2210 déclenche l'exécution d'un script de test 2230 qui envoie une première commande APDU C1, via le lecteur ISO 3010, à destination de la carte 1000 pour activer les instructions de débogage ID. Cette commande est transmise dans un premier canal de communication initié par le PC 2000 associé a lecteur 3010.

En variante cette commande C1 peut être envoyée par l'application de test 2210 avant de lancer le script de test 2230.

La commande C1 a pour effet de faire passer le dispositif à deux états 1230 à l'état actif: B_{enable}=1. A titre illustratif, cette commande C1 peut être une simple demande d'écriture du bit B_{enable}, à la valeur 1.

A noter que pour des questions de sécurité, une telle commande peut nécessiter une authentification préalable de l'utilisateur testeur (c'est-à-dire de l'ordinateur 2000) auprès de la carte 1000, par des mécanismes classiques. Ainsi, la carte 1000 ne sera autorisée à exécuter la commande C1 que si l'authentification s'est bien déroulée.

Après acquittement R1 de cette commande, la carte 1000 est prête pour le débogage du programme compilé 1220.

La suite du script de test 2230 est réalisée et a pour effet d'envoyer une séquence prédéfinie de commandes APDU Ci venant activer et piloter l'exécution du programme compilé 1220 en fonction d'éventuels paramètres de test prédéfinis.

Ces commandes Ci reproduisent un comportement possible d'une exploitation du programme compilé 1220 utilisé dans sa configuration de production. En d'autres termes, ces commandes n'ont trait qu'à la fonction ou opération première OP que le programme compilé 1220 met en oeuvre, et non aux instructions de débogage ID.

A réception par la carte 1000, ces commandes Ci sont traitées par l'exécution du programme compilé 1220 et génèrent des réponses APDU Ri.

Les commandes C1, Ci et réponses R1, Ri sont échangées entre le programme compilé 1220 et l'application de test 2210, au sein du canal de communication CC1 (maître/esclave) entre ces deux composants logiciels et initié par le PC 2000 ou lecteur 3010. Ce premier canal CC1 emprunte notamment le lien 3000.

Lors de l'exécution du programme compilé 1220, les instructions de débogage ID sont exécutées en raison de l'état actif B_{enable}=1 du moyen 1230.

Les instructions de débogage ID comprennent des traitements ne modifiant pas l'exécution des instructions I, par exemple il peut s'agir de récupérer une copie de valeurs de variables internes et/ou de la pile d'exécution courante mémorisant les instructions et les valeurs en cours.

Ces informations récupérées, ou "informations de débogage", sont copiées dans le fichier de débogage 1240. Le fichier de débogage 1240 peut notamment être mis en oeuvre sous forme de liste circulaire, éventuellement chaînée et/ou à entrées de longueur limitée, pour limiter la taille des informations de débogage en mémoire de la carte 1000. Cette configuration est notamment avantageuse pour des cartes à microprocesseur dotées de ressources mémoires limitées. Bien entendu d'autres réalisations, telle qu'un fichier linéaire ou un tableau, peuvent être envisagées.

La fonction de copie est notamment prévue au sein même des instructions de débogage ID.

Une fois le script de test 2230 totalement exécuté, le programme lecteur 2220 peut être lancé alors que le lien de communication ISO 3000 est désormais libre, libéré des communications APDU Ci/Ri.

Le programme lecteur 2220 envoie alors, automatiquement ou sur instruction de l'utilisateur testeur, une nouvelle commande APDU Cz aux fins d'obtenir copie du fichier de débogage 1240. A titre illustratif, cette commande Cz peut être une simple demande de lecture de ce fichier 1240.

Le fichier 1240 est obtenu par lecture de la mémoire 1200 par le système d'exploitation OS de la carte 1000. Le fichier de débogage 1240 est par conséquent envoyé (réponse Rz) au programme lecteur 2220, via le lien ISO 3000.

Comme il ressort de ce qui précède, ce mode de réalisation met en oeuvre une communication différée des informations de débogage par stockage temporaire de celles-ci dans le fichier de débogage 1240.

Dans cet exemple, les communications sont mises en oeuvre de façon successive sur le même lien physique 3000 reliant la carte 1000 au lecteur de carte 3010 et à l'ordinateur 2000.

A noter que dans un mode de réalisation sécurisé, le fichier de débogage 1240 et donc les informations de débogage qu'il contient peuvent être cryptés avant de sortir de la carte 1000 pour transmission sur le lien 3000.

Les informations de débogage ainsi récupérées par le programme lecteur 2220 sont exploitées localement pour en déduire d'éventuels dysfonctionnements et *bugs* du programme compilé afin de les corriger. A titre d'exemple, cette exploitation peut consister en l'affichage des informations de débogage (la valeur des variables internes ou de la pile d'exécution) à l'utilisateur via l'afficheur 2300.

L'exécution du script test 2230, du programme lecteur 2220 ou de l'application de test 2210 peut se finir par l'envoi d'une nouvelle commande (similaire à la commande C1) aux fins de faire basculer le dispositif 1230 à deux états vers l'état d'inhibition B_{enable}=0. Ainsi, si le programme compilé 1220 est à nouveau appelé pour une utilisation autre qu'un test et débogage, son exécution ne s'en trouvera pas allongée du fait des instructions de débogage ID.

La **figure 3** illustre un exemple simplifié de programme compilé (dans sa version source) incluant des instructions de débogage ID.

Cet exemple a trait à une fonction "*inspectedFunction*" qui comprend des instructions I pour réaliser une fonction première du programme (non explicitées aux lignes 14 et 21 par exemple) et des instructions de débogage ID1 à ID6.

Dans cet exemple, les instructions de débogage ont pour objectif d'avertir de la réussite ou non de la fonction *function_a(),* et le cas échéant de remonter la valeur des variables locales var_a, var_b et var_c (ID5 en ligne 29). Les instructions ID1, ID2, ID3, ID4 et ID6 fournissent, au sein des informations de débogage, une indication de l'avancement des traitements de la fonction *inspectedFunction.*

On notera dans cet exemple que l'inhibition ou l'activation des instructions de débogage ID est mise en oeuvre à l'aide d'instructions conditionnelles sur la base du bit B_{enable}. En effet, la ligne 2 de la fonction UDEBUGF appelée par les instructions ID1-ID6 conditionne les traitements de débogage à la présence de B_{enable}=1. Ainsi, en l'absence d'activation des instructions de débogage, l'instruction UDEBUGF retourne simplement à la routine qui l'a appelée, ici à la fonction *inspectedFunction* au point courant.

A noter que c'est au sein de la fonction UDEBUGF (ligne 3) qu'est réalisée la copie, dans le fichier 1240, des chaines de caractères passées en paramètres de cette fonction.

Bien entendu, d'autres réalisations que l'instruction conditionnelle peuvent être envisagées.

En référence maintenant à la **figure 4** décrivant un "mode temps réel" selon l'invention, la carte 1000 est similaire à la carte de la **figure 1**, si ce n'est qu'elle présente une connexion USB 3100 avec une interface entrée/sortie USB 3110 sur l'ordinateur 2000.

Pour cela, la carte 1000 comprend un module de communication 1120 de type Ethernet sur USB (en lieu et place du module ISO 7816 référencé 1110 sur la **figure 1****)** permettant notamment d'inclure un serveur web dans la carte 1000.

Il est à noter que de tels serveurs web sont couramment réalisés à l'aide de la norme Java, par exemple Javacard 3.0.

Un tel module de communication est ainsi configuré pour créer des *sockets* TCP ou UDP avec une entité distante dotée d'une adresse Ethernet ou IP.

Par ailleurs, le moyen 1230 à deux états est mis en oeuvre dans une mémoire programmable une seule fois OTPM 1200' (pour *"One Time Programmable Memory*")*.* De ce fait, le moyen 1230 présente l'état activé (B_{enable}=1) par défaut. Bien entendu cette réalisation du moyen 1230 décrite en lien avec la **figure 4** peut être mise en oeuvre dans le mode indirect de la **figure 1****.** Vice et versa, la réalisation du moyen 1230 décrite précédemment dans le mode indirect peut être mise en oeuvre dans le présent mode direct.

De par la nature même de la mémoire OTPM, une commande d'inhibition des instructions de débogage ID (une commande C1 venant écrire B_{enable}=0) vient désactiver définitivement ces instructions car le bit B_{enable} ne pourra plus revenir à l'état 1. Cette configuration présente un avantage certain en ce qu'elle garantit que les informations secrètes dans la carte ne peuvent désormais plus être accessibles par une personne malintentionnée, via les mécanismes de débogage.

Ainsi, cette réalisation est principalement envisagée lorsque des tests doivent être menés tout de suite après la compilation du programme 1220, et lorsqu'il est prévu de rendre ce programme accessible à la production dès la fin des tests. L'inhibition définitive des instructions de débogage ID à la demande a ainsi lieu à la fin des tests à l'aide d'une simple commande C1 (éventuellement sécurisée par authentification).

Bien entendu, d'autres réalisations sont possibles comme par exemple décomposer le moyen 1230 en la combinaison d'un premier bit B1_{enable} en mémoire ROM réinscriptible pour activer ou désactiver les instructions de débogage ID pendant une phase de tests, et d'un second bit B2_{enable} en mémoire OTPM pour envisager la désactivation définitive des instructions ID le cas échéant.

L'utilisation de la mémoire OTPM seule requiert ainsi que l'application de test et de débogage 2210 n'envoie pas systématiquement les commandes C1 évoquées précédemment en lien avec la **figure 1****.** Seule une telle commande sera envoyée (une seule fois) lorsque les tests seront définitivement terminés.

La **figure 5** illustre les échanges de données dans le mode "temps réel" selon l'invention. Sur cette figure, les pointes des flèches désignent les éléments intervenant soit dans le relais soit dans le traitement d'un message transmis.

Après une authentification classique optionnelle pour autoriser ou non la carte 1000 à exécuter toute commande envoyée par l'ordinateur 2000, le script de test 2230 envoie une séquence de commandes C'i par la connexion USB 3100, sur le canal maître/esclave CC1. Ici, ces commandes peuvent être incluses dans des requêtes http à destination du serveur web équipant la carte 1000.

Ces commandes C'i (une seule est représentée sur la figure) lance et pilote l'exécution du programme compilé 1220.

Comme B_{enable}=1, les instructions de débogage ID sont exécutées au cours de l'exécution du programme compilé.

Ces exécutions des instructions ID permettent de récupérer des informations de débogage, de créer, selon des mécanismes classiques, une *socket* UDP via la connexion USB 3100 avec le logiciel de débogage 2220, et d'envoyer ces informations de débogage (en une ou plusieurs fois) au logiciel de débogage 2220 via cette *socket.* A noter que cette socket peut être créée à la mise sous tension de la carte avant que le programme compilé ne soit exécuté.

Cet envoi est représenté sur la figure par le trait épais discontinu correspondant au canal CC2 initié par la carte et non pas le lecteur.

A noter que l'adresse Ethernet du logiciel de débogage (indiquée dans les paquets UDP transmis) est en mémoire de la carte 1000, par exemple mémorisée après transmission par l'application de test 2210 au début de son exécution.

Une exploitation des informations de débogage par le logiciel de débogage 2220 est alors possible comme décrit ci-dessus pour le mode différé. En outre, étant donné le formatage Ethernet des informations de débogage pour leur transport via la socket UDP, il est aisé de relayer ces données vers un équipement tiers distant de l'ordinateur 2000 via un réseau de communication, par exemple l'Internet.

A la fin de l'exécution de chaque commande Ci par la carte, une réponse R'i est envoyée à l'application de test 2210.

On parle de "mode temps réel" en raison de l'envoi immédiat des informations de débogage lors de l'exécution des instructions ID, alors même que l'exécution du programme compilé 1220 n'est pas terminée. Les deux canaux CC1 et CC2 peuvent donc être simultanés sur une même connexion USB.

Ultérieurement, lorsque les tests et le débogage sont terminés, une commande C1 peut être émise vers la carte pour désactiver (éventuellement définitivement) les instructions de débogage ID. Cela permet d'une part d'obtenir le programme compilé 1220 dans sa version de production sans que son exécution soit rallongée par celle des instructions ID, et d'autre part d'empêcher un éventuel accès interdit à des données secrètes qui seraient remontées via les informations de débogage puisque désormais de telles informations ne sont plus produites.

Cette commande C1 conduit à l'écriture B_{enable}=0 dans la mémoire OTPM 1200' et à son acquittement R1.

Comme montré sur la figure, désormais si de nouvelles commandes C'i sont émises, seules des réponses R'i seront communiquées à l'ordinateur 2000, et non des informations de débogage.

On peut également mettre en ouvre ce mode temps réel dans la configuration matérielle illustrée sur la **figure 6****,** puisque dans ce cas les deux canaux de communication sont physiquement distincts.

L'exemple de la **figure 3** s'applique également au mode direct ou temps réel. Dans ce cas, la fonction UDEBUGF comprend, au lieu d'instructions pour copier les informations de débogage dans le fichier 1240, des instructions pour écrire les informations de débogage au niveau de la *socket* UDP et ainsi les transmettre au programme lecteur 2220.

Les exemples qui précèdent ne sont que des modes de réalisation de l'invention qui ne s'y limite pas.

En particulier, la carte à microprocesseur 1000 peut disposer d'une première connexion physique 3000, par exemple ISO 7816, avec un premier lecteur 3010 et d'une deuxième connexion physique 3100, par exemple USB, avec une interface USB 3110 (tous deux pouvant être reliés à un même ordinateur 2000 comportant l'application de test 2210). Les deux canaux CC1 et CC2 peuvent alors être mis en oeuvre chacun respectivement sur une des deux connexions physiques distinctes.

Par ailleurs, selon la nature des connexions physiques, il est possible de mettre en oeuvre au choix le mode temps réel ou le mode différé, décrits ci-dessus. C'est le cas des connexions USB par exemple. C'est aussi le cas pour une carte à microprocesseur disposant de deux connexions physiques distinctes.

Dans ce cas, le moyen 1230 d'activation ou d'inhibition peut présenter plus de deux états: un premier état B_{enable}=0 correspondant à la désactivation des instructions ID comme décrit précédemment, un deuxième état B_{enable}=1 correspondant à l'activation des instructions ID dans un mode indirect (utilisation du fichier de débogage 1240), et un troisième état B_{enable}=2 correspondant à l'activation des instructions ID dans un mode temps réel *(socket* UDP), par exemple.

Le choix entre le deuxième état et le troisième état (les deux états actifs B_{enable}#0) peut être piloté par l'utilisateur ou être déterminé automatiquement en fonction des connexions disponibles et de leur état d'utilisation, avec par exemple une préférence pour le mode temps réel lorsque les deux modes sont disponibles.

Par ailleurs, plusieurs moyens d'inhibition ou d'activation peuvent coexister au sein du même module matériel de sécurité, un moyen pouvant être associé à un programme compilé donné, ou à un type d'instruction de débogage au sein d'un ou plusieurs programmes compilés contenant plusieurs de ces types d'instruction. L'homme du métier n'aura aucune difficulté à ajuster les enseignements décrits ci-dessus au cas où plusieurs moyens d'inhibition ou d'activation étaient présents.

A noter enfin que le protocole UDP peut être mis en oeuvre indifféremment sur des connexions présentant le protocole de couche physique USB, Bluetooth, ISO 7816 (part 1, définissant les caractéristiques physiques) et ISO 14443 (part 1 également).

## Revendications

1. Module matériel de sécurité (1000) comprenant un microprocesseur (1300) et un programme compilé (1220) exécutable par ledit microprocesseur pour réaliser une opération, **caractérisé en ce que :**
― le programme compilé comprend au moins une instruction de débogage (ID1-ID6) dont l'exécution ou non ne modifie pas celle de ladite opération, et
― le module matériel de sécurité comprend un moyen d'inhibition ou d'activation (1230) de l'instruction de débogage lors de l'exécution du programme compilé.

2. Module matériel de sécurité (1000) selon la revendication 1, configuré pour modifier l'état d'inhibition ou d'activation dudit moyen d'inhibition ou d'activation en réponse à une commande reçue d'une entité externe (2000).

3. Module matériel de sécurité (1000) selon la revendication 2, dans lequel ledit moyen d'inhibition ou d'activation (1230) comprend un bit d'état (B_{enable}) mémorisé en mémoire (1200, 1200') du module matériel de sécurité.

4. Module matériel de sécurité (1000) selon la revendication 3, dans lequel l'instruction de débogage (ID1-ID6) comprend une instruction conditionnelle fonction dudit bit d'état (B_{enable}).

5. Module matériel de sécurité (1000) selon la revendication 4, dans lequel ladite mémoire est une mémoire programmable une seule fois (1200') de sorte qu'une inhibition de l'instruction de débogage soit définitive.

6. Module matériel de sécurité (1000) selon l'une des revendications 1 à 5, dans lequel le moyen d'inhibition ou d'activation (1230) est protégé en modification par un mécanisme cryptographique de sécurité.

7. Module matériel de sécurité (1000) selon l'une des revendications 1 à 6, dans lequel l'au moins une instruction de débogage (ID1-ID6) est configurée pour copier des informations de débogage dans un fichier (1240) stocké localement dans le module matériel de sécurité, et ce dernier (1000) est configuré pour transmettre, sur requête (Cz) d'une entité externe (2000), ledit fichier.

8. Module matériel de sécurité (1000) selon la revendication 7, dans lequel ledit fichier (1240) stocké localement est de type liste circulaire de longueur fixe.

9. Module matériel de sécurité (1000) selon l'une des revendications 1 à 6, configuré pour transmettre, lors de l'exécution du programme compilé, des données, dites de débogage, résultant de l'exécution de l'instruction de débogage sur un canal de communication (CC2) initié par le module matériel de sécurité vers une entité externe (2000).

10. Module matériel de sécurité (1000) selon l'une des revendications 1 à 6, dans lequel le moyen d'inhibition ou d'activation (1230) comprend, outre un état d'inhibition, deux états d'activation correspondant respectivement, à une configuration de l'instruction de débogage pour stocker localement des informations de débogage résultant de l'exécution de cette instruction de débogage et à une configuration de l'instruction de débogage pour transmettre directement ces informations de débogage sur un canal de communication (CC2) initié par le module matériel de sécurité.

11. Procédé de débogage dans un module matériel de sécurité (1000) comprenant un microprocesseur (1300) et un programme compilé (1220) exécutable par ledit microprocesseur pour réaliser une opération, **caractérisé en ce que,** le programme compilé comprenant au moins une instruction de débogage (ID1-ID6) dont l'exécution ou non ne modifie pas celle de ladite opération, le procédé comprend au moins une étape de bascule entre un état d'activation dans lequel l'instruction de débogage est exécutée lorsque le programme compilé l'est, et un état d'inhibition dans lequel l'instruction de débogage n'est pas exécutée lorsque le programme compilé l'est.

12. Procédé de débogage selon la revendication 11, comprenant une étape de réception, par le module matériel de sécurité, d'une commande (C1) de modification de l'état d'inhibition ou d'activation (1230, B_{enable}) émise par une entité externe (2000).

13. Procédé de débogage selon la revendication 11 ou 12, comprenant une étape de bascule définitive dans l'état d'inhibition par écriture d'une information d'inhibition (B_{enable}) dans une mémoire programmable une seule fois (1200').

14. Procédé de débogage selon l'une des revendications 11 à 13, comprenant une étape préalable d'authentification pour autoriser la bascule d'un état vers l'autre.

15. Téléphone mobile comprenant une interface de communication sans contact et un module matériel de sécurité (1000) selon la revendication 9, le module matériel de sécurité comprenant un premier contact électrique (C6) relié à ladite interface de communication sans contact, et dans lequel un canal de communication (CC1) dédié au pilotage de l'exécution du programme compilé par une entité maître externe (2000) et le canal de communication (CC2) initié par le module matériel de sécurité avec ladite entité externe (2220) sont, l'un, conforme à une norme de communication sans contact via le premier contact électrique et, l'autre, conforme à une norme de communication avec contact via un deuxième contact électrique (C7) du module matériel de sécurité.
